# EUROPÄISCHE PATENTSCHRIFT

(11) **EP 3 587 158 B1**
(45) Veröffentlichungstag und Bekanntmachung des Hinweises auf die Patenterteilung: **31.03.2021**
(21) Anmeldenummer: 19180006.9
(22) Anmeldetag: 13.06.2019
(51) Int. Cl.: B60K 1/04, H01M 2/10

(54) **STRUKTURBAUTEIL, BATTERIEGEHÄUSE UND KRAFTFAHRZEUG MIT EINEM SOLCHEN BATTERIEGEHÄUSE**
STRUCTURAL COMPONENT, BATTERY CASE AND MOTOR VEHICLE WITH SUCH A BATTERY CASE
COMPOSANT STRUCTURAL, BOÎTIER DE BATTERIE ET VÉHICULE AUTOMOBILE DOTÉ D'UN TEL BOÎTIER DE BATTERIE

(30) Priorität: 21.06.2018 DE 102018210126
(43) Veröffentlichungstag der Anmeldung: 01.01.2020
(73) Patentinhaber: Volkswagen AG, 38440 Wolfsburg (DE)
(72) Erfinder: Wesche, Carsten, 38104 Braunschweig (DE); Schacht, Stefan, 38100 Braunschweig (DE); Fehner, Henrik, 28259 Bremen (DE); Gerlach, Robin, 38114 Braunschweig (DE)

(56) Entgegenhaltungen:
- DE-A1-102015 111 325
- DE-A1-102016 209 853
- GB-A- 2 555 826
- US-A1- 2017 305 248

## Beschreibung

Die Erfindung betrifft ein Strukturbauteil für ein Batteriegehäuse eines elektrisch angetriebenen Kraftfahrzeugs. Des Weiteren betrifft die Erfindung ein Batteriegehäuse für eine Batterie eines elektrisch angetriebenen Kraftfahrzeugs sowie ein solches Kraftfahrzeug.

Ein elektrisch angetriebenes Kraftfahrzeug weist typischerweise eine Batterien (TraktionsBatterie) auf, welche eine elektrische Maschine zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Batterie speichert (BEV, battery electric vehicle), ein Elektrofahrzeug mit einem Reichweitenverlängerer (REEV, range extended electric vehicle), ein Hybridfahrzeug (HEV, hybrid electric vehicle) und/oder ein Plug-In-Hybridfahrzeug (PHEV, plug-in hybrid electric vehicle) zu verstehen.

Eine insbesondere unfallbedingte, also durch einen Crash oder einen Aufprall hervorgerufene Krafteinwirkung kann eine Beschädigung der Batterie bewirken. Bei einer solchen Beschädigung kann beispielsweise die in der Batterie gespeicherte Energie explosionsartig freigesetzt werden. Ferner können eine Feuergefahr und/oder ein Gefahr aufgrund einer elektrischen Entladung der Batterie für Fahrzeugpassagiere (Insassen) entstehen.

Zur Vermeidung einer Beschädigung der Batterie sind beispielsweise in einem Gehäuseinnenraum des Batteriegehäuses (Versteifungs-)Elemente angeordnet, welche eine Steifigkeit des Gehäuses erhöhen und eine Verformung des Batteriegehäuses in den Gehäuseinnenraum verhindern sollen.

Beispielsweise ist aus der DE 10 2015 111 325 A1 ein Batteriegehäuseteil für eine Traktionsbatterie eines Fahrzeugs bekannt, das einen elektromotorischen Antrieb aufweist. Das Batteriegehäuseteil weist einen Aufnahmekörper auf, in welchen die Traktionsbatterie aufnehmbar ist. Dabei besteht der Aufnahmekörper aus einem thermoplastischen Kunststoff, der wenigstens eine integrierte Organoblechkomponente umfasst. Ferner ist vorgesehen, dass die Organoblechkomponente einen Bodenabschnitt und wenigstens einen senkrecht zum Bodenabschnitt verlaufenden Versteifungsabschnitt aufweist.

Die DE 10 2016 110 330 A1 offenbart ein Gehäuse für eine Fahrzeugbatterie. Das Gehäuse weist eine Deckelplatte und eine Bodenplatte auf, wobei zwischen der Deckelplatte und der Bodenplatte ein mit diesen verbundener Rahmen angeordnet ist. Dabei ist in dem vom Rahmen umschlossenen Raum wenigstens ein Querträgerelement angeordnet.

Der Erfindung liegt die Aufgabe zugrunde, ein zum Schutz einer in einem Batteriegehäuse aufgenommenen Batterie vor einer externen Krafteinwirkung und damit einhergehend vor einer möglichen Beschädigung geeignetes Strukturbauteil anzugeben. Des Weiteren sollen ein Batteriegehäuse mit einem derartigen Strukturbauteil und ein Kraftfahrzeug mit einem solchen Batteriegehäuse angegeben werden.

Diese Aufgabe wird erfindungsgemäß gelöst durch ein Strukturbauteil mit den Merkmalen des Anspruchs 1. Ferner wird die Aufgabe erfindungsgemäß gelöst durch ein Batteriegehäuse mit den Merkmalen des Anspruchs 7 sowie durch ein elektrisch angetriebenes Kraftfahrzeug mit den Merkmalen des Anspruchs 9. Vorteilhafte Weiterbildungen und Ausgestaltungen sind Gegenstand der Unteransprüche.

Das Strukturbauteil ist hierzu für ein Batteriegehäuse eines elektrisch angetriebenen Kraftfahrzeugs vorgesehen und eingerichtet. Das Strukturbauteil weist eine Wand auf, welche sich in einer Bauteilhochrichtung von einer Wandunterseite zu einer Wandoberseite und in einer zur Bauteilhochrichtung senkrechten Bauteillängsrichtung von einer ersten Stirnseite zu einer zweiten Stirnseite erstreckt. So weist die Wand eine flächige Ausdehnung in einer Ebene auf, welche mittels der Bauteilhochrichtung und der Bauteillängsrichtung aufgespannt ist.

Dabei weist die Wand zur Erhöhung deren Biegesteifigkeit eine Anzahl an Sicken und eine Anzahl an Rippen auf wobei die Rippen einseitig an der Wand angeordnet und senkrecht zur Wand orientiert sind. Dabei erstrecken sich die Rippen bzw. die Sicken Bauteillängsrichtung.

So ist die Wand aufgrund der Sicken in einem Querschnitt, also mit einer Schnittebene senkrecht zur Bauteillängsrichtung mäanderförmig. Mit anderen Worten sind im Querschnitt die in Bauteilhochrichtung verlaufenden Abschnitte der Wand bezüglich einer zur Bauteilhochrichtung und zur Bauteillängsrichtung senkrechten Bauteildickenrichtung wechselweise außenseitig angeordnet. Die Rippe bzw. die Rippen sind dabei beispielsweise in einer Sicke angeordnet. Ferner bevorzugt ragt die Rippe in Bauteildickenrichtung nicht über die Sicke hinaus, so dass die Ausdehnung der Wand in dieser Richtung durch die maximale Tiefe der Sicken bestimmt ist.

Mittels der Sicke bzw. der Rippe ist eine Biegesteifigkeit der Wand und somit des Strukturbauteils vorteilhaft erhöht. Insbesondere ist ein (Ab- oder Ein-)Knicken oder Verbiegen der Wand in Bauteildickenrichtung mit einer Biege- oder Knickkante senkrecht zur Erstreckungsrichtung der Rippe bzw. der Sicke, also im Wesentlichen in Bauteillängsrichtung, verhindert. Mit anderen Worten ist eine Biegung oder ein Knicken um eine sich im Wesentlichen in oder gegen die Bauteilhochrichtung erstreckende Biegeachse verhindert. Dem liegt die Überlegung zugrunde, dass das Flächenträgheitsmoment, was auch als Flächenmoment 2. Grades bezeichnet wird, der Wand bezüglich dieser Biegeachse mittels der Sicke bzw. der Rippe vergrößert ist. Mit anderen Worten weist die mit der Sicke und/oder mit der Rippe versehene Wand einen vergleichsweise hohen, sogenannten Steiner'schen Anteil bezüglich der Biegeachse auf.

Gemäß einer vorteilhaften Ausgestaltung ist die Rippe bzw. die Sicke in Bauteillängsrichtung, also von der ersten Stirnseite zur zweiten Stirnseite, zumindest abschnittsweise geringfügig zur Wandunterseite der Wand hin geneigt. Unter geringfügig geneigt ist hierbei ein Neigungswinkel zwischen der Rippe bzw. der Sicke und der Wandunterseite insbesondere größer oder gleich 10° und beispielswiese kleiner als 45°, insbesondere kleiner als 30°, zu verstehen. Aufgrund einer solchen Neigung der Sicke bzw. der Rippe wird eine auf die erste Stirnseite einwirkende Kraft entsprechend zur Wandunterseite hin geleitet. Geeigneter Weise liegt die Wandunterseite an einem Gehäuseboden des Batteriegehäuses an, so dass eine auf die erste Stirnseite einwirkende Kraft zumindest teilweise in den Batterieboden abgeleitet bzw. in diesen eingeleitet wird.

Zusammenfassend wirkt das Strukturbauteil als sogenannter Kraftwandler. Es nimmt dabei insbesondere extern eingeleitete Kräfte auf und/oder leitet diese ab oder weiter. Zudem weist die Rippe bzw. die Sicke eine Doppelfunktion auf. So bewirkt die Rippe bzw. die Sicke einerseits aufgrund derer Neigung eine Kraftleitung einer auf die erste Stirnseite der Wand einwirkenden Kraft zur Wandunterseite hin. Andererseits dient die Rippe bzw. die Sicke der Erhöhung der Biegesteifigkeit.

Gemäß einer vorteilhaften Weiterbildung ist an der Wand eine Vertikalrippe angeordnet, insbesondere angeformt, welche senkrecht zur Wand orientiert ist und sich im Wesentlichen in Bauteilhochrichtung erstreckt. Die Vertikalrippe erhöht analog zur Rippe bzw. zur Sicke die Biegesteifigkeit der Wand. Zusätzlich wirkt die Vertikalrippe als Kraftwandler. Diese leitet eine auf die Wandoberseite oder auf die Wandunterseite wirkende Kraft an die Wandunterseite bzw. an die Wandoberseite.

Gemäß einer vorteilhaften Weiterbildung verringert sich die von der Wandunterseite zur Wandoberseite erstreckende Wandhöhe - also die Ausdehnung der Wand in Bauteilhochrichtung - in Bauteillängsrichtung. Mit anderen Worten verjüngt sich die Wand in Bauteillängsrichtung, also von der ersten zur zweiten Stirnseite hin. Besonders bevorzugt erstreckt sich dabei die Wandunterseite in Bauteillängsrichtung, wobei die Wandoberseite gegen diese geneigt ist. Insbesondere ist das Strukturbauteil auf diese Weise vorteilhafterweise gewichtsparend ausgebildet, wobei die Wand und somit das Strukturbauteil weiterhin aufgrund der ebenfalls gegen die Bauteillängsrichtung geneigte Sicke und/oder Rippe biegesteif ist.

In zweckmäßiger Ausgestaltung ist ein Stützelement an der Wandoberseite der Wand angeformt. Alternativ ist das Stützelement lediglich an der Wandoberseite befestigt. Dieses übernimmt insbesondere eine tragende Funktion für einen Gehäusedeckel des Batteriegehäuses. Dabei sind beispielsweise zusätzlich Montagekonturen im oder am Stützelement angeordnet oder eingebracht. Beispielsweise weist das Stützelement eine (Schrauben-)Aufnahme für eine Schraube zur Befestigung des Gehäusedeckels auf oder bildet eine Steckkontur für eine entsprechend korrespondierende (Gegen-)Kontur am Gehäusedeckel.

An die Wand ist in zweckmäßiger Ausgestaltung ein zu dieser domartig erhabener Fortsatz angeformt. Dabei ist der Fortsatz an der Wand im Bereich der ersten oder der zweiten Stirnseite, also endseitig bezüglich der Bauteillängsrichtung angeformt. Der Fortsatz überragt zweckmäßig die Rippe bzw. die Sicke. Mittels des Fortsatzes ist eine Montage des Strukturbauteils im Batteriegehäuse, insbesondere am Gehäuseboden, und zusätzlich oder alternativ zur Befestigung von Batteriemodulen der Batterie ermöglicht. Für eine sichere Montage und/oder Befestigung der Batteriemodule ist bevorzugt an beiden Seiten der Wand sowohl im Bereich der ersten Stirnseite als auch im Bereich der zweiten Stirnseite jeweils ein Fortsatz angeformt.

Das Strukturbauteil ist insbesondere ein Gussteil, vorzugsweise aus Aluminium. Alternativ hierzu ist das Strukturbauteil durch Schmieden hergestellt. Das Strukturbauteil weist, insbesondere im Vergleich zur Ausbildung des Strukturbauteils als Strang-Press-Profil, eine hohe Funktionsintegration auf. So sind insbesondere Fortsätze sowie die Stützelemente an die Wand monolithisch, also einteilig und zusammenhängend an die Wand beim Gussverfahren anformbar und geeigneter Weise auch angeformt. Ferner ist es somit ermöglicht, dass die Rippe bzw. die Sicke gegen die Bauteillängsrichtung geneigt ist und sich die Wandhöhe gewichtssparend verringert. Dabei ist zusätzlich aufgrund der Sicke und/oder der Rippe eine hohe Biegesteifigkeit realisiert.

In einer vorteilhaften Ausgestaltung ist das Batteriegehäuse für eine (Traktions-)Batterie eines elektrisch angetriebenen Kraftfahrzeugs vorgesehen und eingerichtet. Hierzu weist das Gehäuse eine wannenförmige Aufnahme mit dem Gehäuseboden und mit einem Gehäuserahmen auf. So ist der Gehäuserahmen senkrecht zum Gehäuseboden orientiert und weist zwei parallelen und zueinander beabstandeten Gehäuselängsseiten (Rahmenlängsseiten) und zwei zu diesen quer verlaufende Gehäusequerseiten (Rahmenlängsseiten) auf. Dabei bildet die Aufnahme einen Gehäuseinnenraum. Der Gehäuseinnenraum wird also mittels des Gehäusebodens und mittels des Gehäuserahmens begrenzt.

In den Gehäuseinnenraum ist dabei eine Anzahl an Strukturbauteilen in einer der oben dargestellten Varianten eingebracht, wobei die Bauteilhochrichtung senkrecht zum Gehäuseboden verläuft, also die Strukturbauteile senkrecht zu diesem angeordnet sind. Ferner sind die Strukturbauteile senkrecht zu den Gehäuselängsseiten und somit parallel zu den Gehäusequerseiten orientiert. Hierbei liegt an jeder der beiden Gehäuselängsseiten zumindest eines der Strukturbauteile mit deren ersten Stirnseite an. Somit verringert sich die Wandhöhe der Wand der Strukturbauteil - von der anliegenden Gehäuselängsseite ausgehend - in den Gehäuseinnenraum.

Zudem ist in zweckmäßiger Weiterbildung im Gehäuseinnenraum ein Längsträger aufgenommen, welcher parallel zu den Gehäuselängsseiten und somit quer zu den Strukturbauteilen verläuft und sich von einer der Gehäusequerseiten zur anderen erstreckt. Die Strukturbauteile liegen mit deren zweiten Stirnseite am Längsträger an. Die Strukturbauteile sowie der Längsträger bilden derart eine fachwerkartige Struktur, wobei Batteriemodule der (Traktions-)Batterie in den Gehäuseinnenraum zwischen den Strukturbauteilen bzw. zwischen den Strukturbauteilen und dem Gehäuserahmen aufgenommen sind.

Eine beispielsweise aufgrund eines Unfalls oder Aufpralls (Crash) hervorgerufene und auf den Gehäuserahmen einwirkenden Kraft, wird auf die Strukturbauteile übertragen, welche die Kraft wiederum in den Gehäuseboden und in den Längsträger ableiten (einleiten). Zudem ist aufgrund der mittels der Rippe und/oder der Sicke erhöhten Biegesteifigkeit auch bei vergleichsweise großer Krafteinwirkung auf die Stirnseite der Wand des entsprechenden Strukturbauteils dessen Knicken oder Verbiegen vermieden. Besonders Vorteilhaft ist somit eine Beschädigung der zwischen den Strukturbauteilen angeordneten Batteriemodule der Batterie vermieden oder zumindest die Gefahr einer solchen eine Beschädigung erheblich verringert.

In einer vorteilhaften Ausgestaltung weist ein elektrisch angetriebenes Kraftfahrzeug, im Folgenden kurz auch als Kraftfahrzeug bezeichnet, ein Batteriegehäuse in einer der oben beschriebenen Varianten auf. Insbesondere ist dabei eine Anzahl an Strukturbauteilen im Batteriegehäuse aufgenommen, wobei die Wände der Strukturbauteile eine Sicke und/oder eine einseitig an der Wand angeordnete und senkrecht zu dieser orientierte Rippe aufweisen. Dabei ist das Batteriegehäuse derart im Kraftfahrzeug angeordnet, dass die Bauteillängsrichtung der im Batteriegehäuse angeordneten Strukturbauteile parallel zu einer Fahrzeugquerrichtung, welche auch als Y-Richtung bezeichnet wird, ist. Aufgrund dessen werden die Strukturbauteile auch als Querträger bezeichnet.

So wird bei einem Seitencrash (Seitenaufprall), also bei einer Krafteinwirkung in Fahrzeugquerrichtung auf das Batteriegehäuse, insbesondere aufgrund der Kraftleitenden Wirkung der Strukturbauteile und deren fachwerkartigen Anordnung im Batteriegehäuse, die Batterie vergleichsweise sicher vor einer Beschädigung geschützt.

In geeigneter Ausgestaltung weist das Kraftfahrzeug sogenannte Schweller auf, welche sich in einer auch als X-Richtung bezeichneten Fahrzeuglängsrichtung, also von einem Heck zu einer Front des Kraftfahrzeugs erstrecken. Die Schweller sind insbesondere untergrundseitig im Kraftfahrzeug angeordnet und ein Bestandteil der (Fahrzeug-)Karosserie des Kraftfahrzeugs. Das Batteriegehäuse ist zwischen den Schwellern angeordnet. Dabei bieten die Schweller aufgrund deren vergleichsweise großen Steifigkeit zusätzlichen Schutz vor einer Verformung des Batteriegehäuses und einer Beschädigung der Batterie.

Nachfolgend wird ein Ausführungsbeispiel der Erfindung anhand einer Zeichnung näher erläutert. Darin zeigen:
- Fig. 1: In einer schematischen Draufsicht ein elektrisch angetriebenes Kraftfahrzeug mit Schwellern, zwischen welchen ein Batteriegehäuse für eine Batterie angeordnet ist,
- Fig. 2: in einer perspektivischen Darstellung das Batteriegehäuse mit einer wannenförmigen Aufnahme, welche einen Gehäuseinnenraum bildet, wobei im Gehäuseinnenraum mehrere Strukturbauteile angeordnet sind,
- Fig. 3: in einer perspektivischen Darstellung das Strukturbauteil mit einer Wand, welche Sicken und einseitig abstehende Rippen aufweist, und
- Fig. 4: schematisch einen Querschnitt des Strukturbauteils gemäß Fig. 3.

Einander entsprechende Teile und Größen sind in allen Figuren stets mit gleichen Bezugszeichen versehen.

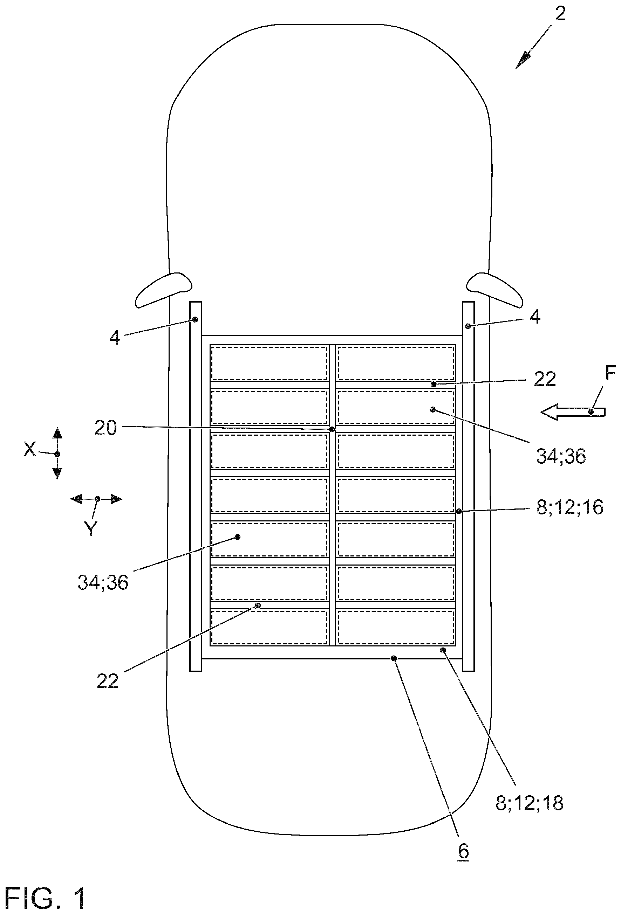

Fig. 1 zeigt ein im Folgenden auch kurz als Kraftfahrzeug bezeichnetes elektromotorisch angetriebenes Kraftfahrzeug 2 in einer schematischen Draufsicht. Dessen Fahrzeuglängsrichtung (X-Richtung) und dessen Fahrzeugquerrichtung (Y-Richtung) sind in einem nebenstehenden Richtungsdiagramm mit X bzw. Y bezeichnet. Das Kraftfahrzeug 2 weist Schweller 4 auf, welche Bestandteil einer nicht weiter dargestellten Karosserie des Kraftfahrzeugs 2 sind. Dabei sind die Schweller 4 parallel und beabstandet zueinander sowie bodenseitig (untergrundseitig des Kraftfahrzeugs 2) angeordnet. Zudem erstrecken sich die Schweller 4 in Fahrzeuglängsrichtung X.

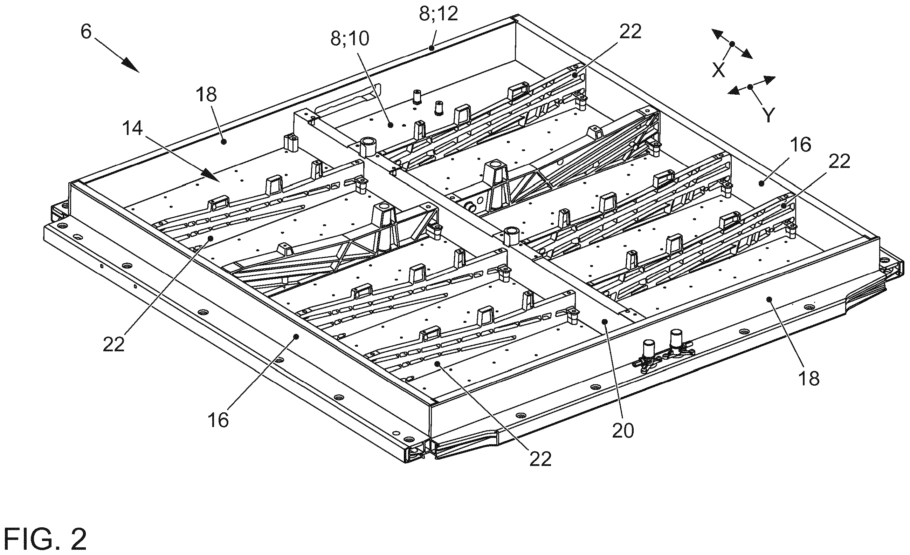

Zwischen den Schwellern 4 ist ein Batteriegehäuse 6 angeordnet, welches in Fig. 2 näher dargestellt ist. Das Batteriegehäuse 6 weist eine wannenförmige Aufnahme 8 mit einem Gehäuseboden 10 und mit einem Gehäuserahmen 12 auf. Die Aufnahme 8 bildet dabei einen Gehäuseinnenraum 14. Mit anderen Worten begrenzt die Aufnahme 8 den Gehäuseinnenraum 14. Der Gehäuserahmen 12 wiederum weist zwei parallel zu den Schwellern 4, also in Fahrzeuglängsrichtung X, verlaufende Gehäuselängsseiten 16 und zwei zu diesen quer, also in Fahrzeugquerrichtung Y verlaufende Gehäusequerseiten 18 auf. Im Gehäuseinnenraum 14 ist ein quaderförmiger Längsträger 20 eingebracht, welcher parallel zu den Gehäuselängsseiten 16 und senkrecht zum Gehäuseboden 10 orientiert ist, wobei sich der Längsträger 20 von einer der Gehäusequerseiten 18 zu der anderen Gehäusequerseite 18 erstreckt.

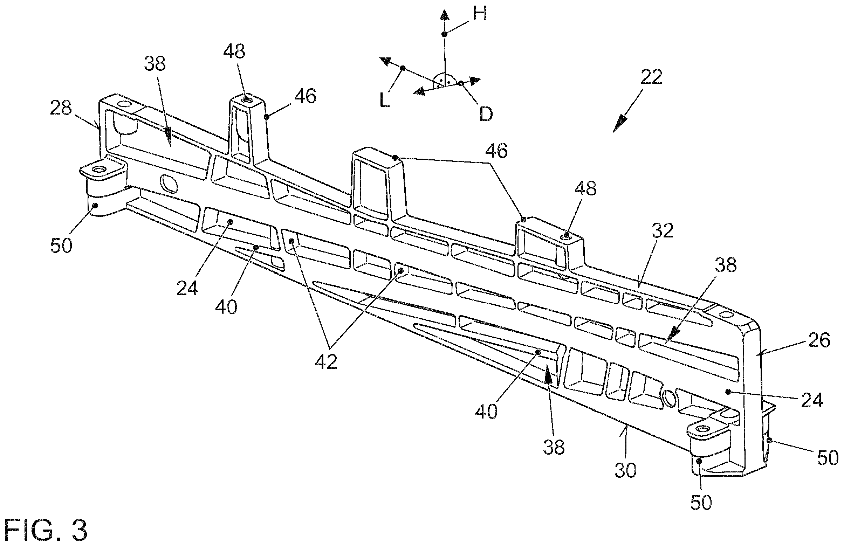

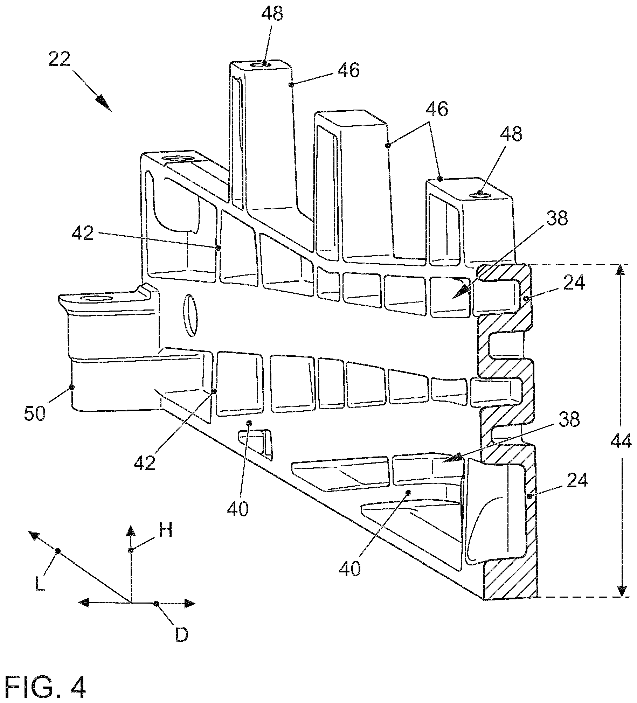

Ferner ist in den Gehäuseinnenraum 14 eine Anzahl an Strukturbauteilen 22 angeordnet. Jedes der Strukturbauteile 22 weist, wie in den Figuren 3 und 4 in vergrößertem Maßstab gezeigt ist, eine Wand 24 auf, welche eine flächige Ausdehnung in einer Bauteilhochrichtung H und in einer Bauteillängsrichtung L aufweist. So erstreckt sich das Strukturbauteil 22 in Bauteillängsrichtung L von einer ersten Stirnseite 26 zu einer zweiten Stirnseite 28 und in Bauteilhochrichtung H von einer Wandunterseite 30 zu einer Wandoberseite 32, wobei hier die Ausdehnung in Bauteillängsrichtung L größer ist als diejenige in Bauteilhochrichtung H.

Jedes der Strukturbauteile 22 liegt dabei an der entsprechenden Gehäuselängsseite 16 mit der ersten Stirnseite 26 dessen Wand 24 an. Die zweite Stirnseite 28 der Wand 24 jedes der Strukturbauteile 22 liegt dabei am Längsträger 20, und die Wandunterseite 30 liegt am Gehäuseboden 10 an. Die Bauteilhochrichtung H verläuft senkrecht zum Gehäuseboden 10. Dabei sind die Strukturbauteile 22 quer zu den Gehäuselängsseiten 16 und zum Längsträger 20 orientiert. Somit erstrecken sich die Strukturbauteile 22 in Fahrzeugquerrichtung Y, weshalb die Strukturbauteile 22 auch als Querträger bezeichnet werden. Die Strukturbauteile 22 sowie der Längsträger 20 bilden eine fachwerkartige Struktur. In den Gehäuseinnenraum14 zwischen den Strukturbauteilen 22 bzw. zwischen den Strukturbauteilen 22 und dem Gehäuserahmen 12 sind punktiert dargestellte Batteriemodule 34 aufgenommen, welche die (Traktions-)Batterie 36 bilden.

Die Wand 24 jedes Strukturbauteils 22 weist eine Anzahl an Sicken 38 sowie eine Anzahl an Rippen 40 auf, wobei die Rippen 40 einseitig an der Wand 24 angeordnet und senkrecht zu dieser orientiert sind. Wie in Fig. 4 erkennbar ist, ist die Wand 24 aufgrund der Sicken 38 im Querschnitt mäanderförmig ausgebildet. Diejenigen Abschnitte der Wand 24, welche im Querschnitt in Bauteilhochrichtung H verlaufend sind somit bezüglich einer zur Bauteilhochrichtung H und zur Bauteillängsrichtung L senkrechten Bauteildickenrichtung D wechselweise außenseitig angeordnet. Ferner ragen die Rippen 40 dabei in Bauteildickenrichtung D nicht über die Sicken 38 hinaus. Mit anderen Worten ist die Ausdehnung der Rippen 40 in Bauteildickenrichtung D kleiner als eine Sickentiefe der Sicken 38 in dieser Richtung.

Die Sicken 38 und die Rippen 40 erstrecken sich im Wesentlichen in Bauteillängsrichtung L, also von der ersten Stirnseite 26 zur zweiten Stirnseite 28 hin, wobei die Rippen 40 sowie die Sicken 38 zumindest abschnittsweise gegen die Bauteillängsrichtung L geringfügig geneigt sind.

Die Rippen 40 und die Sicken 38 weisen eine Doppelfunktion auf. Sie bewirken aufgrund deren Neigung zum Gehäuseboden 10 hin eine Kraftleitung einer auf die erste Stirnseite 26 der Wand 24 einwirkenden Kraft F zur Wandunterseite 30 hin. Des Weiteren dienen die Rippen 40 und die Sicken 38 der Erhöhung der Biegesteifigkeit der Wand 24 und somit des Strukturbauteils 22.

Zusammenfassend wirkt das Strukturbauteil 22 als sogenannter Kraftwandler. Es nimmt dabei insbesondere extern eingeleitete Kräfte auf und/oder leitet diese ab. So stütz sich bei in Fahrzeugquerrichtung Y auf das Batteriegehäuse 6 einwirkender Kraft F der Gehäuserahmen 12 an den Strukturbauteilen 22 ab. Aufgrund der kraftwandelnden (kraftleitenden) Wirkung der am Gehäuserahmen 14 anliegenden Strukturbauteilen 22 wird die Kraft F in den Gehäuseboden 10 und in den Längsträger 20 geleitet. Auf diese Weise ist die Batterie 36 vor einer Krafteinwirkung und vor einer entsprechenden Beschädigung geschützt. Die Kraft F ist hier durch einen entsprechenden Pfeil repräsentiert und beispielsweise durch einen Crash (Seitenaufprall, Unfall) bewirkt.

An der Wand 24 des Strukturbauteils 22 sind zu dieser senkrecht orientierte und im Wesentlichen in Bauteilhochrichtung H erstreckende Vertikalrippen 42 angeordnet, welche eine Biegesteifigkeit der Wand 24 zusätzlich erhöhen. Die Vertikalrippen 42 erstrecken sich dabei entlang der gesamten Ausdehnung der Wand 24 in Bauteilhochrichtung H, also von der Wandunterseite 30 zur Wandoberseite 32 hin, oder lediglich abschnittsweise über mehrere der Sicken 38. Die Ausdehnung der Wand 24 in Bauteilhochrichtung H wird im Folgenden auch als Wandhöhe 44 bezeichnet.

Die Wandhöhe 44 der Wände 24 jedes Strukturbauteils 22 verringert sich in gewichtssparender Weise in deren Bauteillängsrichtung L von der ersten Stirnseite 26 zur zweiten Stirnseite 28. Also verringert sich die Wandhöhe 44 von derjenigen Gehäuselängsseite 16, an welcher das entsprechende Strukturbauteil 22 anliegt, zum Längsträger 20, also zu einer Mitte des Gehäuseinnenraums 14 hin. Dabei sind an der Wandoberseite 32 in Bauteilhochrichtung H drei emporstehende Stützelemente 46 für einen nicht weiter dargestellten Gehäusedeckel angeformt. Das bezüglich der Bauteillängsrichtung L erste und dritte Stützelement 46 weist jeweils eine Schraubenaufnahme 48 für eine Schraube zur Montage des Gehäusedeckels auf.

An der Wand 24 jedes Strukturbauteils 22 sind jeweils zu dieser domartig erhabene Fortsätze 50 angeformt, welche die Sicken 38 und die Rippe 40 in Bauteildickenrichtung D überragt. Die Fortsätze 50 sind dabei auf beiden Seiten der Wand 24 im Bereich der ersten Stirnseite 26 sowie im Bereich der zweiten Stirnseite 28 angeformt. Mit anderen Worten sind die Fortsätze 50 endseitig bezüglich der Bauteillängsrichtung L und beidseitig der Wand 24 angeformt. Zudem sind die Fortsätze endseitig bezüglich der Wandhochrichtung H im Bereich der Wandunterseite 30 angeformt, wobei die Fortsätze 50 als Schraubdome zur Montage des entsprechenden Strukturbauteils 22 am Gehäuseboden 10 und zur Befestigung der entsprechenden Batteriemodule 34 ausgebildet sind.

Die Erfindung ist nicht auf das vorstehend beschriebene Ausführungsbeispiel beschränkt. Vielmehr können auch andere Varianten der Erfindung vom Fachmann hieraus abgeleitet werden, ohne den Gegenstand der Erfindung, gemäß der Ansprüche, zu verlassen.

### Bezugszeichenliste

- 2: Kraftfahrzeug
- 4: Schweller
- 6: Batteriegehäuse
- 8: Aufnahme
- 10: Gehäuseboden
- 12: Gehäuserahmen
- 14: Gehäuseinnenraum
- 16: Gehäuselängsseite
- 18: Gehäusequerseite
- 20: Längsträger
- 22: Strukturbauteil
- 24: Wand
- 26: erste Stirnseite
- 28: zweite Stirnseite
- 30: Wandunterseite
- 32: Wandoberseite
- 34: Batteriemodul
- 36: Batterie
- 38: Sicke
- 40: Rippe
- 42: Vertikalrippe
- 44: Wandhöhe
- 46: Stützelement
- 48: Schraubenaufnahme
- 50: Fortsatz

- D: Bauteildickenrichtung
- F: Kraft
- H: Bauteilhochrichtung
- L: Bauteillängsrichtung
- X: Fahrzeuglängsrichtung
- Y: Fahrzeugquerrichtung

## Patentansprüche

1. Strukturbauteil (22) für ein Batteriegehäuse (6) eines elektrisch angetriebenen Kraftfahrzeugs (2), mit einer Wand (24), welche sich in einer Bauteilhochrichtung (H) von einer Wandunterseite (30) zu einer Wandoberseite (32) und in einer zu dieser senkrechten Bauteillängsrichtung (L) von einer ersten Stirnseite (26) zu einer zweiten Stirnseite (28) erstreckt,
- wobei die Wand (24) zur Erhöhung deren Biegesteifigkeit eine Anzahl an Sicken (38) und eine Anzahl an Rippen (40) aufweist,
- wobei die Rippen (40) einseitig an der Wand (24) angeordnet und senkrecht zu dieser orientiert sind,
- wobei die Rippen (40) bzw. die Sicken (38) sich in Bauteillängsrichtung (L) erstrecken, und
- wobei die Wand (24) aufgrund der Sicken (38) einen mäanderförmigen Querschnitt aufweist.

2. Strukturbauteil (22) nach Anspruch 1,
**dadurch gekennzeichnet,**
**dass** die Rippen (40) bzw. die Sicken (38) in Bauteillängsrichtung (L) zumindest abschnittsweise zur Wandunterseite (30) der Wand (24) hin geneigt sind.

3. Strukturbauteil (22) nach Anspruch 1 oder 2,
**gekennzeichnet durch**
eine an der Wand (24) angeordnete und senkrecht zu dieser orientierte Vertikalrippe (42), wobei sich die Vertikalrippe (42) in Bauteilhochrichtung (H) erstreckt.

4. Strukturbauteil (22) nach einem der Ansprüche 1 bis 3,
**dadurch gekennzeichnet,**
**dass** sich die von der Wandunterseite (30) zur Wandoberseite (32) erstreckende Wandhöhe (44) der Wand (24) in Bauteillängsrichtung (L) verringert.

5. Strukturbauteil (22) nach einem der Ansprüche 1 bis 4,
**gekennzeichnet durch**
ein Stützelement (46), insbesondere für einen Gehäusedeckel, wobei das Stützelement (46) an der Wandoberseite (32) der Wand (24) angeformt ist.

6. Strukturbauteil (22) nach einem der Ansprüche 1 bis 5,
**gekennzeichnet durch**
einen zur Wand (24) domartig erhabenen Fortsatz (50) zur Montage in einem Batteriegehäuse (6) und/oder zur Befestigung eines Batteriemoduls (34) einer Batterie (36), welcher Fortsatz (50) im Bereich der ersten Stirnseite (26) oder der zweiten Stirnseite (28) an die Wand (24) angeformt ist.

7. Batteriegehäuse (6) für eine Batterie (36) eines elektrisch angetriebenen Kraftfahrzeugs (2), aufweisend
- eine wannenförmige Aufnahme (8) mit einem Gehäuseboden (10) und mit einem Gehäuserahmen (12), wobei die Aufnahme (8) einen Gehäuseinnenraum (14) bildet,
- eine Anzahl von im Gehäuseinnenraum (14) angeordneten Strukturbauteilen (22) nach einem der Ansprüche 1 bis 6, welche senkrecht zum Gehäuseboden (10) und senkrecht zu zwei parallelen und zueinander beabstandeten Gehäuselängsseiten (16) des Gehäuserahmens (12) orientiert sind,
- wobei an jeder der Gehäuselängsseiten (16) zumindest eines der Strukturbauteile (22) anliegt, und
- wobei sich die Wandhöhe (44) deren Wände (24) von der entsprechenden Gehäuselängsseite (16) ausgehend verringert.

8. Batteriegehäuse (6) nach Anspruch 7,
**gekennzeichnet durch**
einen im Gehäuseinnenraum (14) quer zu den Strukturbauteilen (22) angeordneten Längsträger (20), an welchem die Strukturbauteile (22) anliegen.

9. Elektrisch angetriebenes Kraftfahrzeug (2) mit einem Batteriegehäuse (6) nach Anspruch 7 oder 8, wobei die Bauteillängsrichtung (L) der Strukturbauteile (22) parallel zu einer Fahrzeugquerrichtung (Y) ist.

10. Kraftfahrzeug (2) nach Anspruch 9,
**gekennzeichnet durch**
sich in einer Fahrzeuglängsrichtung (X) erstreckende Schweller (4), wobei das Batteriegehäuse (6) zwischen den Schwellern (4) angeordnet ist.

## Claims

1. Structural component (22) for a battery housing (6) of an electrically driven motor vehicle (2), with a wall (24) which extends in a component vertical direction (H) from a wall lower side (30) to a wall upper side (32) and in a component longitudinal direction (L), which is perpendicular with respect to the said component vertical direction (H), from a first end side (26) to a second end side (28),
- the wall (24) having a number of beads (38) and a number of ribs (40) in order to increase its flexural stiffness,
- the ribs (40) being arranged on one side on the wall (24) and being oriented perpendicularly with respect to the said wall (24),
- the ribs (40) and the beads (38) extending in the component longitudinal direction (L), and
- the wall (24) having a meandering cross section on account of the beads (38).

2. Structural component (22) according to Claim 1, **characterized in that** the ribs (40) and the beads (38) are inclined towards the wall lower side (30) of the wall (24) at least in sections in the component longitudinal direction (L).

3. Structural component (22) according to Claim 1 or 2, **characterized by** a vertical rib (42) which is arranged on the wall (24) and is oriented perpendicularly with respect to the latter, the vertical rib (42) extending in the component vertical direction (H).

4. Structural component (22) according to one of Claims 1 to 3, **characterized in that** the wall thickness (44) of the wall (24), which wall thickness (44) extends from the wall lower side (30) to the wall upper side (32), decreases in the component longitudinal direction (L).

5. Structural component (22) according to one of Claims 1 to 4, **characterized by** a supporting element (46), in particular for a housing cover, the supporting element (46) being integrally formed on the wall upper side (32) of the wall (24).

6. Structural component (22) according to one of Claims 1 to 5, **characterized by** a projection (50) which is elevated in a dome-like manner with respect to the wall (24) for mounting on a battery housing (6) and/or for fastening a battery module (34) of a battery (36), which projection (50) is integrally formed onto the wall (24) in the region of the first end side (26) or the second end side (28).

7. Battery housing (6) for a battery (36) of an electrically driven motor vehicle (2), having
- a trough-shaped receptacle (8) with a housing bottom (10) and with a housing frame (12), the receptacle (8) forming a housing interior space (14),
- a number of structural components (22) according to one of Claims 1 to 6 which are arranged in the housing interior space (14) and are oriented perpendicularly with respect to the housing bottom (10) and perpendicularly with respect to two parallel housing longitudinal sides (16) of the housing frame (12) which are spaced apart from one another,
- at least one of the structural components (22) bearing against each of the housing longitudinal sides (16), and
- the wall height (44) of their walls (24) decreasing, starting from the corresponding housing longitudinal side (16).

8. Battery housing (6) according to Claim 7, **characterized by** a longitudinal carrier (20) which is arranged in the housing interior space (14) transversely with respect to the structural components (22) and against which the structural components (22) bear.

9. Electrically driven motor vehicle (2) with a battery housing (6) according to Claim 7 or 8, the component longitudinal direction (L) of the structural components (22) being parallel to a vehicle transverse direction (Y) .

10. Motor vehicle (2) according to Claim 9, **characterized by** sills (4) which extend in a vehicle longitudinal direction (X), the battery housing (6) being arranged between the sills (4).

## Revendications

1. Composant structurel (22) destiné à un boîtier de batterie (6) d'un véhicule automobile électrique (2), le composant structurel comprenant une paroi (24) qui s'étend dans une direction verticale (H) du composant depuis un côté de paroi inférieur (30) à un côté de paroi supérieur (32) et dans une direction longitudinale (L), perpendiculaire à celui-ci, depuis une première face frontale (26) à une deuxième face frontale (28),
- la paroi (24) comportant un certain nombre de bourrelets (38) et un certain nombre de nervures (40) pour augmenter sa rigidité en flexion,
- les nervures (40) étant disposées sur un côté de la paroi (24) et étant orientées perpendiculairement à celle-ci,
- les nervures (40) et les bourrelets (38) s'étendant dans la direction longitudinale (L) du composant, et
- la paroi (24) ayant une section transversale sinueuse due aux bourrelets (38).

2. Composant structurel (22) selon la revendication 1,
**caractérisé en ce que**
les nervures (40) ou les bourrelets (38) sont incliné(e)s dans la direction longitudinale (L) du composant au moins par portions en direction du côté de paroi inférieur (30) de la paroi (24).

3. Composant structurel (22) selon la revendication 1 ou 2,
**caractérisé par**
une nervure verticale (42) disposée sur la paroi (24) et orientée perpendiculairement à celle-ci, la nervure verticale (42) s'étendant dans la direction verticale (H) du composant.

4. Composant structurel (22) selon l'une des revendications 1 à 3,
**caractérisé en ce que**
la hauteur de paroi (44) de la paroi (24), s'étendant du côté de paroi inférieur (30) au côté de paroi supérieur (32), diminue dans la direction longitudinale (L) du composant.

5. Composant structurel (22) selon l'une des revendications 1 à 4,
**caractérisé par**
un élément de support (46), destiné notamment à un couvercle de boîtier, l'élément de support (46) étant formé sur le côté de paroi supérieur (32) de la paroi (24) .

6. Composant structurel (22) selon l'une des revendications 1 à 5,
**caractérisé par**
un prolongement (50) surélevé en forme de dôme par rapport à la paroi (24) et destiné au montage dans un boîtier de batterie (6) et/ou à la fixation d'un module de batterie (34) d'une batterie (36), lequel prolongement (50) est formé sur la paroi (24) dans la région de la première face frontale (26) ou de la deuxième face frontale (28).

7. Boîtier de batterie (6) destiné à une batterie (36) d'un véhicule automobile électrique (2), ledit boîtier de batterie comportant
- un logement (8) en forme d'auge comprenant un fond de boîtier (10) et un cadre de boîtier (12), le logement (8) formant un espace intérieur (14) du boîtier,
- un certain nombre de composants structurels (22) selon l'une des revendications 1 à 6 qui sont disposés dans l'espace intérieur (14) du boîtier et qui sont orientés perpendiculairement au fond de boîtier (10) et perpendiculairement à deux côtés longitudinaux (16) du cadre de boîtier (12) qui sont disposés parallèlement à distance l'un de l'autre,
- au moins un des composants structurels (22) venant en appui sur chacun des côtés longitudinaux (16) du boîtier, et
- la hauteur de paroi (44) de leurs parois (24) diminuant à partir du côté longitudinal (16) correspondant du boîtier.

8. Boîtier de batterie (6) selon la revendication 7,
**caractérisé par**
un longeron (20) qui est disposé dans l'espace intérieur (14) du boîtier transversalement aux composants structurels (22) et sur lequel les composants structurels (22) viennent en appui.

9. Véhicule automobile électrique (2) comprenant un boîtier de batterie (6) selon la revendication 7 ou 8, la direction longitudinale (L) des composants structurels (22) étant parallèle à une direction transversale (Y) du véhicule.

10. Véhicule automobile (2) selon la revendication 9,
**caractérisé par**
des seuils de porte (4) qui s'étendent dans la direction longitudinale (X) du véhicule, le boîtier de batterie (6) étant disposé entre les seuils de porte (4) .
